# EUROPEAN PATENT APPLICATION

(11) **EP 4 529 156 A1**
(43) Date of publication of application: **26.03.2025**
(21) Application number: 23199006.0
(22) Date of filing: 22.09.2023
(51) Int. Cl.: H04N 7/18, G08B 13/196

(54) **CONTROL OF CAMERA MONITORING SYSTEM**

(71) Applicant: VOLVO TRUCK CORPORATION, 405 08 Göteborg (SE)
(72) Inventor: QUIBRIAC, Yann, 69007 Lyon (FR); THERIEN, Julien, 01340 MARSONNAS (FR)
(74) Representative: Ström & Gulliksson AB

(57) **Abstract**

A computer system (100) is presented. The computer system (100) comprises processing circuitry (110) configured to control a surveillance system (200) to operate at a power saving state (410) for a predetermined sleep time (312) of a first surveillance cycle. The processing circuitry (110) is further configured to, upon lapse of the predetermined sleep time (312), control the surveillance system (200) to operate at a detection power state (420) and at the detection power state (420), control the surveillance system (200) to obtain first image data (323₁) of a surrounding area (205) of a vehicle (10). The processing circuitry (110) is further configured to, at the detection power state (420), process the first image data (323₁) to determine whether at least one predetermined target (50) is in the surrounding area (205) and upon determining that the predetermined target (50) is not present in the surrounding area (205), control the surveillance system (200) to operate at the power saving state (410) for the predetermined sleep time of a second surveillance cycle following the first surveillance cycle.

## Description

### TECHNICAL FIELD

The disclosure relates generally to control of surveillance systems. In particular aspects, the disclosure relates to control of camera monitoring systems for surveillance of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Significant advancements are being made to enhance vehicle safety and security. Surveillance systems for heavy-duty vehicles help ensure the well-being of drivers, passengers, and cargo. These systems are designed to monitor, record, and analyze activities both inside and outside the vehicle, providing real-time and valuable information and valuable insights to fleet managers and operators.

### SUMMARY

According to a first aspect of the disclosure, a computer system is presented. The computer system comprises processing circuitry configured to control a surveillance system to operate at a power saving state for a predetermined sleep time of a first surveillance cycle and upon lapse of the predetermined sleep time, control the surveillance system to operate at a detection power state. The processing circuitry is further configured to, at the detection power state, control the surveillance system to obtain first image data of a surrounding area of a vehicle and at the detection power state, process the first image data to determine whether at least one predetermined target is in the surrounding area. The processing circuitry is further configured to upon determining that the predetermined target is not present in the surrounding area, control the surveillance system to operate at the power saving state for the predetermined sleep time of a second surveillance cycle following the first surveillance cycle. The first aspect of the disclosure may seek to reduce a risk that an electrical power system of a vehicle is depleted. A technical benefit may include reducing an average power consumption (e.g. current consumption) of a surveillance system while avoiding altering a degree of protection provided by the surveillance system.

Optionally in some examples, including in at least one preferred example, processing circuitry is further configured to, during the second surveillance cycle, upon lapse of the predetermined sleep time, control the surveillance system to operate at the detection power state and at the detection power state, control the surveillance system to obtain second image data of the surrounding area of the vehicle. The processing circuitry is further configured to, at the detection power state, process the second image data to determine whether at least one predetermined target is in the surrounding area, and upon determining that the predetermined target is not present in the surrounding area, control the surveillance system to operate at the power saving state for the predetermined sleep time of a third surveillance cycle following the second surveillance cycle. A technical benefit may include reducing an average power consumption of a surveillance system while avoiding altering a degree of protection provided by the surveillance system.

Optionally in some examples, including in at least one preferred example, the processing circuitry is further configured to, at the detection power state, upon determining that the predetermined target is present in the surrounding area, control the surveillance system to operate at a monitoring power state. A technical benefit may include allowing the surveillance system to consume more power when a predetermined target is present in the surrounding area which reduces a risk that the degree of protection provided by the surveillance system is reduced.

Optionally in some examples, including in at least one preferred example, the second image data to determine whether the at least one predetermined target is present in the surrounding area by processing the image data further comprises processing the image data by comparison of the second image data to the first image data. A technical benefit may include providing a low power and efficient function of determining if a predetermined target is present in the surrounding area. This further reduces an average power consumption of the surveillance system while avoiding altering a degree of protection provided by the surveillance system.

Optionally in some examples, including in at least one preferred example, the processing circuitry is further configured to, at the detection power state, upon determining that the second image data is substantially different from the first image data, further process the first image data by an item recognition circuitry to determine presence of the predetermined target in the surrounding area. A technical benefit may include providing a low power and efficient function of determining if a predetermined target is present in the surrounding area and not consume more power than required in determining if the predetermined target is present in the surrounding area. This further reduces an average power consumption of the surveillance system while avoiding altering a degree of protection provided by the surveillance system.

Optionally in some examples, including in at least one preferred example, the processing circuitry is further configured to, at the detection power state, obtain the first image data from the surveillance system, wherein the surveillance system comprises a plurality of image sensor systems. A technical benefit may include providing select first image data relevant to a current situation and/or based on historic data.

Optionally in some examples, including in at least one preferred example, the processing circuitry is further configured to: obtain image data from a first image sensor subset comprising at least one image sensor system of the plurality of image sensor systems at the first surveillance cycle, and obtain image data from a second image sensor subset comprising at least one image sensor system of the plurality of image sensor systems at the second surveillance cycle, wherein the first image sensor subset is different from the second image sensor subset. A technical benefit may include monitoring a more complete area surrounding the vehicle thereby allowing the average power consumption of the surveillance system to be decreased while avoiding altering a degree of protection provided by the surveillance system.

Optionally in some examples, including in at least one preferred example, the processing circuitry is further configured to upon a lapse of the predetermined sleep time of each surveillance cycle, control a subset of a plurality of image sensor systems of the surveillance system to operate at the detection power state, wherein each subset of the plurality of image sensor systems is cycled through in an order, the order being at least one of, a predetermined order, a variable order determined depending on targets detected, a random order. A technical benefit may include monitoring a more complete area surrounding the vehicle thereby allowing the average power consumption of the surveillance system to be decreased while avoiding altering a degree of protection provided by the surveillance system.

Optionally in some examples, including in at least one preferred example, the processing circuitry is further configured to: during the second surveillance cycle, upon lapse of the predetermined sleep time, control the surveillance system to operate at the detection power state; at the detection power state, control the surveillance system to obtain second image data of the surrounding area of the vehicle; at the detection power state, process the second image data to determine whether at least one predetermined target is in the surrounding area; upon determining that the predetermined target is not present in the surrounding area, control the surveillance system to operate at the power saving state for the predetermined sleep time of a third surveillance cycle following the second surveillance cycle; at the detection power state, upon determining that the predetermined target is present in the surrounding area, control the surveillance system to operate at a monitoring power state; at the detection power state, upon determining that the second image data is substantially different from the first image data, further process the first image data by an item recognition circuitry to determine presence of the predetermined target in the surrounding area; at the detection power state, obtain the first image data from the surveillance system, wherein the surveillance system comprises a plurality of image sensor systems; obtain image data from a first image sensor subset comprising at least one image sensor system of the plurality of image sensor systems at the first surveillance cycle, and obtain image data from a second image sensor subset comprising at least one image sensor system of the plurality of image sensor systems at the second surveillance cycle, wherein the first image sensor subset is different from the second image sensor subset; and upon a lapse of the predetermined sleep time of each surveillance cycle, control a subset of a plurality of image sensor systems of the surveillance system to operate at the detection power state, wherein each subset of the plurality of image sensor systems is cycled through in an order, the order being at least one of, a predetermined order, a variable order determined depending on targets detected, a random order, wherein processing the second image data to determine whether the at least one predetermined target is present in the surrounding area by processing the image data further comprises processing the image data by comparison of the second image data to the first image data. A technical benefit may include any of the benefits mention in reference to the previous examples.

According to a second aspect of the disclosure, a vehicle comprising the computer system of the first aspect is presented. The second aspect of the disclosure may seek to reduce a risk that an electrical power system of a vehicle is depleted. A technical benefit may include providing surveillance of the vehicle for extended periods of time with a reduced risk of depleting an electrical power system of the vehicle.

Optionally in some examples, including in at least one preferred example, the power saving state is entered responsive to the vehicle being parked. A technical benefit may include automatically providing surveillance and safety of vehicle and/or driver at parked situations with a reduced risk of depleting the electrical power system of the vehicle.

Optionally in some examples, including in at least one preferred example, the vehicle is a heavy-duty vehicle. A technical benefit may include protection of the generally expensive vehicles and any cargo hauled by the vehicle.

According to a third aspect of the disclosure, a computer implemented method is presented. The computer implemented method comprises, controlling, by processing circuitry of a computer system, surveillance system to operate at a power saving state for a predetermined sleep time of a first surveillance cycle. The computer implemented method further comprises, upon lapse of the predetermined sleep time, controlling, by the processing circuitry of the computer system, the surveillance system to operate at a detection power state and at the detection power state, controlling, by the processing circuitry of the computer system, the surveillance system to obtain first image data of a surrounding area of a vehicle. computer implemented method comprises, at the detection power state, processing, by the processing circuitry of the computer system, the first image data to determine whether at least one predetermined target is in the surrounding area and upon determining that the predetermined target is not present in the surrounding area, controlling, by the processing circuitry of the computer system, the surveillance system to operate at the power saving state for the predetermined sleep time of a second surveillance cycle following the first surveillance cycle. The third aspect of the disclosure may seek to reduce a risk that an electrical power system of a vehicle is depleted. A technical benefit may include reducing an average power consumption of a surveillance system while avoiding altering a degree of protection provided by the surveillance system.

According to a fourth aspect of the disclosure, a computer program product is presented. The computer program product comprises program code for performing, when executed by the processing circuitry, the method of the third aspect. The fourth aspect of the disclosure may seek to reduce a risk that an electrical power system of a vehicle is depleted. A technical benefit may include reducing an average power consumption of a surveillance system while avoiding altering a degree of protection provided by the surveillance system.

According to a fifth aspect of the disclosure, a non-transitory computer-readable storage medium is presented. The non-transitory computer-readable storage medium comprises instructions, which when executed by the processing circuitry, cause the processing circuitry to perform the method of the third aspect. The fifth aspect of the disclosure may seek to reduce a risk that an electrical power system of a vehicle is depleted. A technical benefit may include reducing an average power consumption of a surveillance system while avoiding altering a degree of protection provided by the surveillance system.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary network diagram of a vehicle and surveillance according to an example.
**FIG. 2** is an exemplary top view of a vehicle and surveillance system according to an example.
**FIG. 3** is a schematic view of a surveillance system manager according to an example.
**FIG. 4** is a flow chart for controlling a surveillance system according to an example.
**FIG. 5** is a state change diagram of a surveillance system according to an example.
**FIG. 6** is a schematic view of a computer system controlling a surveillance system according to an example.
**FIG. 7** is a block diagram of a method for controlling a surveillance system according to an example.
**FIG. 8** is a schematic view of a computer program product according to an example.
**FIG. 9** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

One purpose of surveillance systems for heavy-duty vehicles is to augment safety, security, and efficiency within the transportation sector. By utilizing advanced technologies such as cameras, sensors, and connectivity solutions, these systems are intended to address various challenges faced by fleet operators, including accident prevention, driver monitoring, cargo protection, and/or compliance with industry regulations.

Surveillance systems in vehicles generally comprise high-resolution cameras. These cameras are strategically installed in and around the vehicle to capture a comprehensive view of the surroundings, both within the cabin and the external environment. Some surveillance systems comprise cameras offering night vision capabilities, wide-angle lenses, and high frame rates to ensure clear and accurate footage. To complement the camera's vision, surveillance systems generally comprise various sensors. These may include proximity sensors, collision detection sensors, and tire pressure monitoring sensors, among others. These sensors provide data to the surveillance system, contributing to real-time alerts and facilitating data analysis. Surveillance systems help protect valuable cargo from theft, damage, and tampering during transportation. They act as a deterrent to potential thieves and assist in the investigation of any suspicious activities.

However, generally, the more advanced the surveillance system, the higher the power consumption of the surveillance system. This may become an issue for parked vehicles when surveillance systems may have to be powered from an on-board battery of the vehicle.

The teachings of the present disclosure provide methods, systems, functions and devices that may reduce power consumption of surveillance systems. By providing a selective activation of an image circuitry of a surveillance system, power consumption may be decreased. The selective activation may be described as punctual image monitoring and/or a periodic image monitoring. The image circuitry may capture one or more images, and if no suspicious person or object is detected in these images, the image circuitry may go to sleep for a predetermined time before it wakes up again and captures one or more additional imaged. The frame rate may be increased if a suspicious person or object is detected in the captured images.

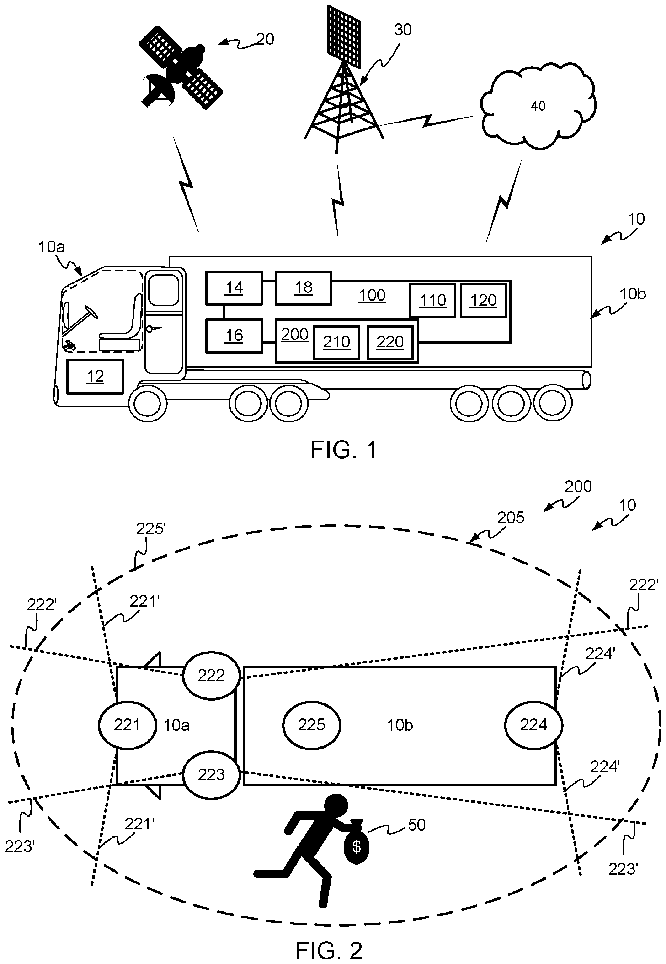

**FIG. 1** is an exemplary schematic side view of a heavy-duty vehicle **10** (hereinafter referred to as vehicle **10**). The vehicle **10** comprises a tractor unit **10a** which is arranged to tow a trailer unit **10b.** In other examples, other vehicles may be employed, e.g., trucks, buses, and construction equipment. The vehicle **10** comprises all vehicle units and associated functionality to operate as expected, such as a powertrain, chassis, and various control systems. The vehicle **10** comprises one or more propulsion sources **12.** The propulsion source **12** may be any suitable propulsion source **12** exemplified by, but not limited to, one or more or a combination of an electrical motor, a combustion engine such as a diesel, gas or gasoline powered engine. The vehicle **10** further comprises an energy source **14** suitable for providing energy for the propulsion source **12.** That is to say, if the propulsion source **12** is an electrical motor, a suitable energy source **14** would be a battery or a fuel cell. The vehicle **10** further comprises sensor circuitry **16** arranged to detect, measure, sense or otherwise obtain data relevant for operation of the vehicle **10.** The sensor circuit **16** may comprise one or more of an accelerometer, a gyroscope, a wheel Speed Sensor, an ABS sensor, a throttle position sensor, a fuel level sensor, a temperature Sensor, a pressure sensor, a rain sensor, a light sensor, proximity sensor, a lane departure warning sensor, a blind spot detection sensor, a TPMS sensor etc. Operational data relevant for operation of the vehicle **10** may include, but is not limited to, one or more of a speed of the vehicle **10,** a weight of the vehicle **10,** an inclination of the vehicle **10,** a status of the energy source **14** of the vehicle **10** (state of charge, fuel level etc.), a current speed limit of a current road travelled by the vehicle **10,** etc. The vehicle **10** may further comprise communications circuitry **18** configured to receive and/or send communication. The communications circuitry **18** may be configured to enable the vehicle **10** to communicate with one or more external devices or systems such as a cloud server **40.** The communication with the external devices or systems may be directly or via a communications interface such as a cellular communications interface **30,** such as a radio base station. The cloud server **40** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The communication circuitry **18** may, additionally or alternatively, be configured to enable the vehicle **10** to be operatively connected to a Global Navigation Satellite System (GNSS) **20** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **10** may be configured to utilize data obtain from the GNSS **20** to determine a geographical location of the vehicle **10.**

The vehicle **10** in **FIG. 1** further comprises a surveillance system **200** and a computer system **100.** The computer system **100** may be operatively connected to the surveillance system **200,** the communications circuitry **18,** the sensor circuitry **16,** the energy source **14** and/or the propulsion source **12** of the vehicle **10.** The computer system **100** comprises processing circuitry **110.** The computer system **100** may comprise a storage device **120,** advantageously a non-volatile storage device such as a hard disk drives (HDDs), solid-state drives (SSDs) etc. In some examples, the storage device **120** is operatively connected to the computer system **100.** The surveillance system **200** may comprise surveillance system processing circuitry **210,** the surveillance system processing circuitry **210** may be part of the processing circuitry **110** of the computer system **100.** The surveillance system **200** may comprise one or more image sensor systems **220.** An image sensor system **220** comprises one or more image sensors configured to sense, detect, measure or otherwise obtain image data of an inside or outside of the vehicle **10.** The image sensor system **220** may be referred to as a camera monitoring system. The image sensor system **220** may be configured to capture still image data (still images) or a series of images forming video image data (video images). Still images are static visual representations captured using cameras or other imaging devices. Still images capture a single moment in time and do not have any motion or movement. A still image is a single frame, a snapshot frozen in time, capturing a specific scene or subject at a particular instance. A still image represents a single perspective or viewpoint. Still image data may be provided in any suitable format, exemplified by, but not limited to JPEG, PNG, GIF, or RAW. A video image is a series of still images played in rapid succession, creating the illusion of motion. It is substantially a sequence of continuous frames captured over time, resulting in a moving visual representation. Video images consist of multiple frames played one after another at a high speed, typically at 15, 24, 30, or 60 frames per second (FPS) although higher and lower frame rates may very well be considered. This creates the perception of motion, allowing viewers to see events unfolding over time. Video image data may be provided in any suitable format, exemplified by, but not limited to MP4, AVI, MOV, or MKV.

In **FIG. 2****,** a top view of an exemplary vehicle **10** is shown. The vehicle **10** comprises a surveillance system **200** configured to monitor a surrounding area **205** of the vehicle **10.** In **FIG. 2****,** the surveillance system **200** comprises a plurality of image sensor systems **220,** i.e. a front view image sensor system **221,** a rear view image sensor system **224,** a right view image sensor system **222,** a left view image sensor system **223** and a birds view image sensor system **225.** The front view image sensor system **221** is configured to monitor an area in front of the vehicle **10,** in **FIG. 2** delimited by front view delimiters **221'.** The rear view image sensor system **224** is configured to monitor an area behind the vehicle **10,** in **FIG. 2** delimited by rear view delimiters **224'.** The right view image sensor system **222** is configured to monitor an area to the right of the vehicle **10** (curb view camera in countries with right hand traffic), in **FIG. 2** delimited by right view delimiters **222'.** The left view image sensor system **223** is configured to monitor an area to the left of the vehicle **10** (curb view camera in countries with left hand traffic), in **FIG. 2** delimited by left view delimiters 223'. The birds view image sensor system **225** is configured to monitor an area around vehicle **10,** in **FIG. 2** delimited by a bird view delimiter **225'.** It should me mentioned that the location and field of views of the image sensor systems **221, 222, 223, 224, 225** in **FIG. 2** are exemplary. In some examples, one or more of the image sensor systems **221, 222, 223, 224, 225** are configured with a 360° field of vies provide by e.g. one or more fishbowl lenses.

In **FIG. 2****,** the image sensor systems **221, 222, 223, 224, 225** are all mounted on the vehicle **10.** This is one example, in other examples, one, some or all image sensor systems **220** are remote from the vehicle **10.** This may be the case when the vehicle **10,** by the communication circuitry **18,** is operatively connected to image sensor systems **220** in e.g. parking garages etc. Further to this, in some examples, the vehicle **10** may comprise further image sensor systems **220** monitoring additional or overlapping areas around the vehicle **10.** Two or more image sensor systems **220** may very well monitor substantially the same area around the vehicle **10,** such configurations may be provided when one image sensor system **220** is an image sensor system configured for IR wavelength (a thermal system) and another image sensor system is a an image sensor system **220** configured for wavelengths seen by a human eye. A vehicle **10** according to the present disclosure may comprise any number of image sensor systems **220** and any combination of the image sensor systems **221, 222, 223, 224, 225** exemplified in **FIG. 2****.**

The surveillance system **200** is configured to detect suspicious activity. The suspicious activity may comprise a predetermined target **50** being present in the surrounding area **205** of the vehicle **10.** In **FIG. 2****,** the predetermined target **50** is exemplified by a burglar running away, but this is for illustrative purposes only. The predetermined target **50** may be any type of object or person in the surrounding area **205** of the vehicle **10.** Predetermined targets **50** may be persons or vehicles present in the surrounding area **205** of the vehicle **10.** The predetermined targets **50** may be defined by a movement speed or movement pattern of persons or vehicles present in the surrounding area **205** of the vehicle **10.** For instance, a person approaching the vehicle **10** and stopping in the surrounding area **205** of the vehicle **10** may be considered a predetermined target **50,** while a person walking at a steady pace towards the vehicle **10** passing the vehicle **10** may not be considered a predetermined target **50.** More advanced classifications where a stance of a person (crouching, crawling etc.) may be considered in defining what constitutes a predetermined target **50.**

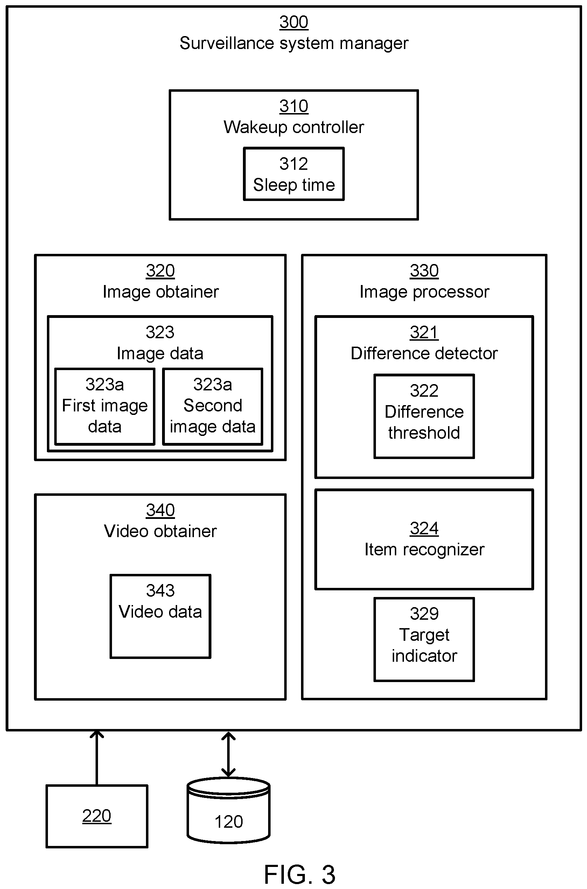

In **FIG. 3****,** a block diagram of an architecture of a surveillance system manager **300** is shown. The computer system **100** and/or the surveillance system processing circuitry **210** may be configured to provide the functions and features of the surveillance system manager **300.**

The surveillance system manager **300** comprises a wakeup controller **310.** The wakeup controller **310** is configured to wake the surveillance system manager **300** from a low power state. The wakeup controller **310** may be configured to wake the surveillance system manager **300** upon lapse of a predetermined sleep time **312.** The wakeup controller **310** may be configured as a watchdog timer configured to generate an interrupt or other data upon lapse of the predetermined sleep time **312.** In some examples the predetermined sleep time **312** is a configurable sleep time controlled by the surveillance system manager **300.** In some examples, the predetermined sleep time **312** is a fixed sleep time of 30 s or less. In some examples, the predetermined sleep time **312** is a fixed sleep time of 15 s or less. In some examples, the predetermined sleep time **312** is a fixed sleep time of 5 s or less. In some examples, the predetermined sleep time **312** is a random sleep time below a maximum sleep time. The maximum sleep time may be 30 s or less. A minimum value accepted for the predetermined sleep time **312** may be determined by hardware constraints of the system **100, 200** implementing the wakeup controller **310** such as a system clock frequency etc.

The surveillance system manager **300** further comprises a low frame rate image obtainer **320,** image obtainer **320** for short. The low frame rate image obtainer **320** is configured to obtain low frame rate image data **323,** image data **323** for short, from one or more image sensor systems **220** of the surveillance system **200.** The low frame rate image data **323** may be zero frame rate image data, i.e. still images. The low frame rate image obtainer **320** may be configured to obtain low frame rate image data **323** from any image sensor system **220** of the surveillance system **200.** In some examples, each time the low frame rate image obtainer **320** is activated, it may be configured to obtain low frame rate image data **323** from an image sensor systems **220** that is different from an image sensor systems **220** from which image data **323** was obtained at a previous activation of the low frame rate image obtainer **320.** In some examples, the image obtainer **320** may be configured to, temporarily or persistently, store historic low frame rate image data **323** as previous low frame rate image data **323b,** or a second low frame rate image data **323b.** Current, or latest image data **323** may sometimes be referred to as current low frame image data **323a** or first low frame rate image data **323a.** In some examples, the previous low frame rate image data **323b** is stored in the storage device **120.**

To exemplify, assume the image sensor systems **221, 222, 223, 224, 225** of **FIG. 2****.** The low frame rate image data **323** may be configured to cycle through the image sensor systems **221, 222, 223, 224, 225** by activating different image sensor systems **221, 222, 223, 224, 225** each time the low frame rate image obtainer **320** is activated. For instance, the low frame rate image obtainer **320** may be configured to obtain low frame rate image data **323** from the front view image sensor system **221** at a first activation, and to obtain low frame rate image data **323** from the rear view image sensor system **224** at a second activation, and so on cycling through the image sensor systems **221, 222, 223, 224, 225.** The low frame rate image obtainer **320** may be configured to obtain low frame rate image data **323** from a subset of the image sensor systems **221, 222, 223, 224, 225** each time the low frame rate image obtainer **320** is activated. A first subset may comprise the front view image sensor system **221** and the right side image sensor system **223.** A second subset may comprise the rear view image sensor system **224** and the right side image sensor system **223.** A third subset may comprise the left view image sensor system **224,** the rear view image sensor system **224** and the front view image sensor system **221.** A fourth subset may comprise the birds view image sensor system **225.** As seen from this example ,the same image sensor systems **221, 222, 223, 224, 225** may form part of different subsets and each subset may comprise just one image sensor systems **221, 222, 223, 224, 225** or a plurality of image sensor systems **221, 222, 223, 224, 225.** An order of how the image sensor systems **221, 222, 223, 224, 225** or the subsets of image sensor systems **221, 222, 223, 224, 225** are cycled through may be a predetermined order, a variable order determined depending on the low frame rate image data **323,** or a random order.

The low frame rate image obtainer **320** may be configured to store the low frame rate image data **323** on a storage device, e.g. the storage device **120** of the computer system **100.**

The surveillance system manager **300** further comprises an image processor **330.** The image processor **330** is configured to process the low frame rate image data **323** obtained by the low framerate image obtainer **320** to determine presence of at least one predetermined target **50** in the low frame rate image data **323.**

The image processor **321** may comprise a difference detector **321** configured to compare the low frame rate image data **323a** to the previous low frame rate image data **323b** obtained from the same image sensor system **220.** If there is a difference between the two sets of low frame rate image data **323,** the image processor **330** may be configured to provide a target indicator **329** indicating that the predetermined target **50** is preset in the low frame rate image data **323.** Determining if there is a difference between the current low frame rate image data **323a** and the previous low frame rate image data **323b** may be done in one or more different ways such as pixel-wise comparison, mean squared error (MSE), structural similarity index (SSI), histogram comparison etc. Pixel-wise comparison involves directly comparing the pixel values of corresponding pixels in the two sets of low frame rate image data **323.** An absolute or squared difference between the pixel values can be calculated to quantify the dissimilarity. MSE is a metric used to measure the average squared difference between the pixel values of two images where a lower MSE values indicate greater similarity between the two sets of low frame rate image data **323.** SSI is a metric that takes into account not only pixel-wise differences but also the structural information of the two sets of low frame rate image data **323.** SSI is designed to provide a more accurate assessment of perceived image quality. Histograms of pixel intensities may be computed for both sets of low frame rate image data **323,** and their differences may be quantified using various metrics like histogram intersection, Bhattacharyya distance, or Earth Mover's Distance, etc. Detecting a difference between the two sets of low frame rate image data **323** is a simple, low power and fast way of determining presence of the predetermined target **50** in the low frame rate image data **323.** In order to ensure that minor shift in the low frame rate image data **323** does not provide a target indicator **329** indicating that the predetermined target **50** is preset in the low frame rate image data **323,** the difference between the two sets of low frame rate image data **323** may have to be greater than a difference threshold **322** in order to provide a target indicator **329** indicating that the predetermined target **50** is preset in the low frame rate image data **323.** The difference threshold **322** may be a percentage difference indicating a number of pixels being different between the two sets of low frame rate image data **323.** The previous low frame rate image data **323b** may be provided as an average of a plurality of sets of previous low frame rate image data **323b.**

As an alternative to, or in addition to, the difference detector **321,** the image processor **330** may comprise an item recognizer **324.** The item recognizer **324** may be configured to recognize features in the low frame rate image data **323.** Feature recognition may involve extracting distinctive features from the low frame rate image data **323,** such as edges, corners or descriptors, and then matching. The feature recognition of the item recognizer **324** may be paired with the difference detector **321** such that a target indicator **329** indicating that the predetermined target **50** is preset in the low frame rate image data **323** is provided if new and/or changed features are present in the low frame rate image data **323.**

In some examples, the item recognizer **324** may be configured to perform object recognition in the low frame rate image data **323.** Object recognition may performed in numerous ways and generally involves computer vision techniques and machine learning algorithms to identify and classify objects within the low frame rate image data **323.** Object recognition may comprise preprocessing of the low frame rate image data **323** e.g. resizing, normalization, converting the low frame rate image data **323** etc. The reprocessed low frame rate image data **323** is subjected to feature extraction wherein meaningful features are extracted from the low frame rate image data **323** that may represent the objects present in it. Features may be simple, such as the above exemplified edges, corners, and descriptors or more complex, like deep learning-based features extracted from convolutional neural networks (CNNs). The extracted features may be represented in a format that is suitable for further analysis. This may involve flattening the features into a vector or using more advanced techniques like feature histograms etc. In supervised machine learning, a labeled dataset is provided to train the item recognizer **324.** This dataset comprises images along with corresponding class labels, which indicate the objects present in the images. Using the labeled dataset, a machine learning algorithm may be trained to learn patterns and relationships between the extracted features and the corresponding object labels. Common machine learning algorithms for object recognition comprise support vector machines (SVMs), random forests, and deep learning-based methods like CNNs. Once the model is trained, the model may be used to classify new, unseen images. The image is first preprocessed and features are extracted, just like in the training phase. Then, the trained model predicts the class label of the object(s) in the image based on the extracted features. The item recognizer **324** may be configured to provide post-processing to improve the object recognition results. The post-processing may comprise non-maximum suppression to eliminate duplicate detections, and thresholding may be applied to filter out low-confidence predictions.

The item recognizer **324** is generally computationally heavier than the difference detector **321.** To this end, in some examples, the item recognizer **324** is only executed responsive to the difference detector **321** detecting a difference between the two sets of low frame rate image data **323.**

The surveillance system manager **300** may further comprises a high frame rate image obtainer **340,** video obtainer **340** for short. The high frame rate image obtainer **340** is configured to obtain high frame rate image data **343,** video data **343** for short, from one or more image sensor systems **220** of the surveillance system **200.** The high frame rate image data **343** may have any frame rate being higher than the frame of the low frame rate image data **323.** In order to limit an amount of data storage needed (if the high frame rate image data **343** is stored at e.g. the storage device **120** of the computer system **100**), the frame rate of the high frame rate image data **343** may be 5-20 fps, such as 15 fps. To increase smoothness of motions, the frame rate of the high frame rate image data **343** may be 20-40 fps, such as 30 fps. In order to capture fast moving objects and/or fine details, the frame rate of the high frame rate image data **343** may be 40-100 fps, such as 60 fps.

The high frame rate image obtainer **340** may be configured to obtain high frame rate image data **343** from any or all image sensor system **220** of the surveillance system **200.** The high frame rate image obtainer **340** may be configured to obtain high frame rate image data **343** correspondingly to how the low frame rate image obtainer **320** may be configured to obtain low frame rate image data **323** as exemplified above.

The high frame rate image obtainer **340** may be configured to store the high frame rate image data **343** on a storage device such as the storage device **120** of the computer system **100.** Additionally, or alternatively, the high frame rate image obtainer **340** may be configured to provide the high frame rate image data **343** to a display device of the surveillance system **200.**

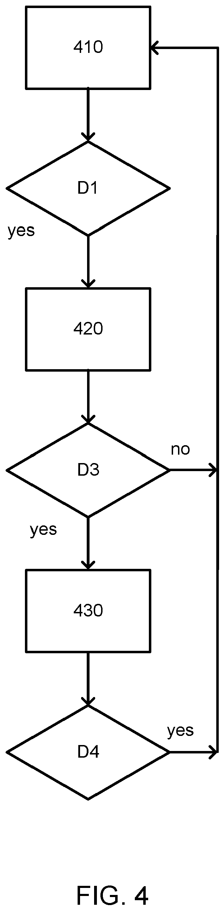

The processing circuitry **110** of the computer system **100,** the processing circuitry **210** of the surveillance system **200** and/or the surveillance system manager **300** may be configured to control the surveillance system **200** as shown in the flowchart of **FIG. 4****.** The surveillance system **200** is controlled to enter a first state **410,** a power saving state **410** or low power state for the predetermined sleep time **312.** At a first decision point **D1** it is determined if the predetermined sleep time **312** has lapsed. If the predetermined sleep time **312** has not lapsed, the surveillance system **200** remains at the power saving state **410.** If, at the first decision point **D1** it is determined that the predetermined sleep time **312** has lapses, the surveillance system is controlled to enter a second state **420,** a detection power state **420** or medium power state. In **FIG. 4****,** the control of the surveillance system **200** at the power saving state **410** is indicated to be a polling process, but this is for illustrative purposes and the surveillance system **200** may be controlled at the power saving state **410** as exemplified with reference to **FIG. 3** and the wakeup controller **310.**

At the power saving state **410,** a minimum of features of the surveillance system **200** are activated. The power saving state **410** is the lowest power state of the surveillance system **200** and all image sensor systems **220** may be powered off. To avoid leakage currents, at the power saving state **410,** all, or at least most, functionality except for that required by the wakeup controller **310,** may be powered down. The wakeup controller **310** may be realized as an extremely low power counter or timer provided with a low power clock (RC clock etc.) that generates an interrupt and wakes further processing circuitry **110, 210** responsive to the lapse of the predetermined sleep time **312.** A maximum instantaneous power consumption of the surveillance system at the power saving state **410** may be as low as a few µA, and an average power consumption is about the same.

Upon entering the detection power state **420,** further features of the surveillance system **200** are activated. At the detection power state **420,** the surveillance system **200** may be controlled to obtain low frame rate image data **323,** i.e. image data **323,** of the surrounding area **205** of the vehicle **10.** The low frame rate image data **323** may be obtained by controlling one or more image sensor systems **210** to obtain the low frame rate image data **323** as exemplified in reference to **FIG. 3** and the image obtainer **320.** Any image sensor system **210** activated in order to obtain the low frame rate image data **323** may be deactivated immediately after the low frame rate image data **323** have been obtained. This reduces power consumption of the surveillance system **200** further. The obtained low frame rate image data **323** is processed to determine presence of the predetermined target **50** in the surrounding area **205.** The low frame rate image data **323** may be processed as exemplified with reference to **FIG. 3** and the image processor **330.** At a second decision point **D2** it is determined, by e.g. the image processor **330,** if the predetermined target **50** is present in the surrounding area **205.** This may be provided by referencing the target indicator **329.** If, at a third decision point **D3,** it is determined that the predetermined target **50** is not present in the surrounding area **205,** the surveillance system **200** is once more controlled to enter the power saving state **410** for the predetermined sleep time **312.** If, at the third decision point **D3,** it is determined that the predetermined target **50** is present in the surrounding area **205,** the surveillance system **200** may be controlled to enter a third state **430,** a monitoring power state **430,** or high power state.

At the detection power state **420,** at least one image sensor system **210** is activated to obtain the low frame rate image data **323.** This consumes significantly more power than the power saving state **410.** The difference in power consumption will depend on specifications of the activated image sensor system **210** and configuration of the low frame rate image data **323** obtained. The processing of the low frame rate image data **323** may be comparably low energy by configuring specific hardware circuitry and/or software functions for determining presence of the predetermined target **50** in the surrounding area **205.** Further, by processing in more than one step by e.g. as exemplified starting by determining difference in the obtained low frame rate image data **323a** compared to previous low frame rate image data **323b** prior to performing more complex processing of the low frame rate image data **323.**

At the monitoring power state **430,** the surveillance system **200** is configured to obtain high frame rate image data **343** from at least one image sensor system **210.** The monitoring power state **430** may correspond to the functionality exemplified with reference to **FIG. 3** and the video obtainer **440.** If, at a fourth decision point **D4,** it is determined that there is no longer a need to remain at the monitoring power state **430,** the surveillance system **200** is once more controlled to enter the power saving state **410** for the predetermined sleep time **312.** The surveillance system **200** may be controlled to enter the power saving state **410** for the predetermined sleep time **312** responsive to an external reset such as an operator of vehicle **10** or surveillance personnel providing a reset for the surveillance system **200** in e.g. response to visual confirmation (of the surrounding area **205** and/or the high frame rate image data **343**) that the predetermined target **50** in not present in the surrounding area **205.** Additionally, or alternatively, the surveillance system **200** may be controlled to enter the power saving state **410** for the predetermined sleep time **312** responsive to processing, by the processing circuitry **110** of the computer system **100,** the processing circuitry **210** of the surveillance system **200** and/or the surveillance system manager **300,** of the high frame rate image data **343** indicating that the predetermined target **50** in not present in the surrounding area **205.**

At the monitoring power state **430,** at least one image sensor system **210** is substantially continuously activated in order to provide the high frame rate image data **343.** This consumes significantly more power that the detection power state **420.**

Although not seen in **FIG. 4****,** the surveillance system **200** may be controlled to enter the monitoring power state **430** responsive to reception of other triggers. Other triggers may be provided by sensor circuitry **16** such as PIR detectors etc. Other triggers may be provided via a user interface of the alarm system **200** where an operator of vehicle **10** may indicate distress. Other triggers may be provided via the communications circuitry **18** of the vehicle **10** where an remote operator of the vehicle **10** or the alarm system may indicate increased awareness.

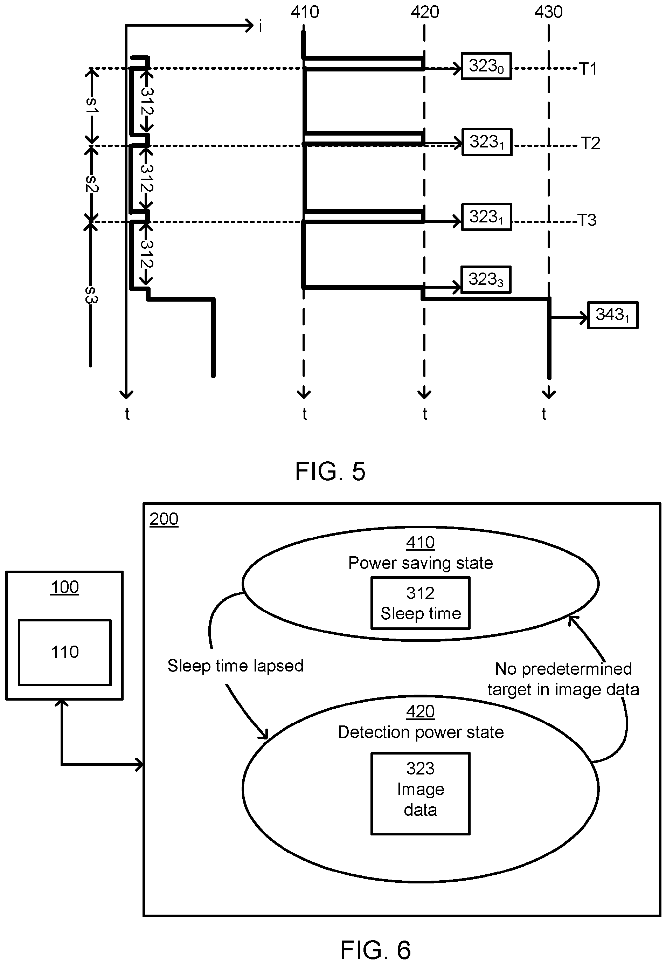

In **FIG. 5****,** an exemplary state chart with associated current consumption **i** of a surveillance system **200** controlled according to the flowchart presented in **FIG. 4****.** The current consumption **i** is proportional to a power consumption of the surveillance system **200.** The state chart and the current consumption **i** are shown along common time axis **t.** At a first point in time **T1,** the surveillance system **200** enters a first surveillance cycle **s1.** At the first point in time **T1,** the surveillance system **200** is controlled to operate at the power saving state **410** for the predetermined sleep time **312.** Upon lapse of the predetermined sleep time **312,** the surveillance system **200** is controlled to enter the detection power state **420.** At the detection power state **420,** first low frame rate image data **323₁** is obtained and presence of the predetermined target **50** in the surrounding area **205** is determined. Presence of the predetermined target **50** in the surrounding area **205** may be determined based on comparing the first low frame rate image data **323₁** to initial first low frame rate image data **323₀**. In **FIG. 5****,** it is, during the first surveillance cycle **s1**, determined that the predetermined target **50** is not present in the surrounding area **205** and the surveillance system **200** is controlled to operate at the power saving state **410** for the predetermined sleep time **312** at a second surveillance cycle **s2** following the first surveillance cycle **s1**, this occurs at a second point in time **T2.** During the second surveillance cycle **s2,** upon lapse of the predetermined sleep time **312,** the surveillance system **200** is controlled to enter the detection power state **420.** At the detection power state **420,** a second low frame rate image data **323₂** is obtained and presence of the predetermined target **50** in the surrounding area **205** is determined. Presence of the predetermined target **50** in the surrounding area **205** may be determined based on comparing the second low frame rate image data **323₂** to the first low frame rate image data **323₁**. In **FIG. 5****,** it is, during the second surveillance cycle **s2,** determined that the predetermined target **50** is not present in the surrounding area **205** and the surveillance system **200** is controlled to operate at the power saving state **410** for the predetermined sleep time **312** at a third surveillance cycle **s3** following the second surveillance cycle **s2,** this occurs at a third point in time **T3.** During the third surveillance cycle **s3,** upon lapse of the predetermined sleep time **312,** the surveillance system **200** is controlled to enter the detection power state **420.** At the detection power state **420,** a third low frame rate image data **323₃** is obtained and presence of the predetermined target **50** in the surrounding area **205** is determined. Presence of the predetermined target **50** in the surrounding area **205** may be determined based on comparing the third low frame rate image data **323₃** to the first and/or the second low frame rate image data **323₁, 323₂**. In **FIG. 5****,** it is, during the third surveillance cycle **s3,** determined that the predetermined target **50** is present in the surrounding area **205** and the surveillance system **200** is controlled to operate at the monitoring saving state **430.**

As seen in **FIG. 5****,** the current consumption **i** is significantly lower at the power saving state **410** compared to the detection power state **420** and the monitoring power state **430.** The current consumption **i** shown in **FIG. 5** is exemplary and it may be that configurations and specifications of the image sensor systems **220** is such that a peak current consumption, i.e. a peak power consumption, during the detection power state **420** may be substantially the same as a peak current consumption during the monitoring power state **430.** However, as seen in **FIG. 5****,** average current consumptions, i.e. average power consumptions, of surveillance cycles **s1**, **s2** wherein the monitoring power state **430** is not entered, is significantly lower than an average power consumption of the surveillance cycle **s3** wherein the monitoring power state **430** is entered. Controlling the surveillance system **200** as presented by the present disclosure may significantly decrease an average power consumption of the surveillance system **200.**

In **FIG. 6** an exemplary block diagram of a surveillance system **200** controlled by the computer system **100** is shown. The computer system **100** comprises processing circuitry **110** configured to control the surveillance system **200** to operate at the power saving state **410** for the predetermined sleep time **312** of a first surveillance cycle **s1.** Upon lapse of the predetermined sleep time **312,** the processing circuitry **110** is configured to control the surveillance system **200** to operate at a detection power state **420.** At the detection power state **420,** the processing circuitry **110** is configured to control the surveillance system **200** to obtain first image data **323** of a surrounding area **205** of a vehicle **10.** The processing circuitry **110** is further configured to, at the detection power state **420,** process the first image data **323** to determine whether at least one predetermined target **50** is in the surrounding area **205.** Upon determining that the predetermined target **50** is not present in the surrounding area **205,** the processing circuitry **110** is configured to control the surveillance system **200** to operate at the power saving state **410** for the predetermined sleep time **312** of a second surveillance cycle **s2** following the first surveillance cycle **s1.**

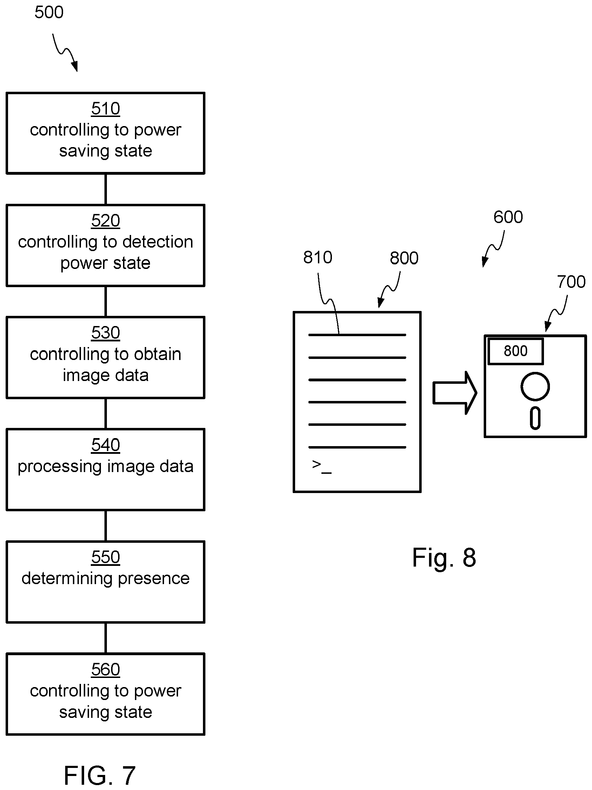

In **FIG. 7****,** an exemplary method **500** for controlling a surveillance system **200** is shown. The method **500** shown in **FIG. 7** may be expanded and/or modified to comprise any suitable feature or function presented herein although not specifically mentioned in reference to **FIG. 7****.** For instance, the method **500** may comprise all or some of the actions, functions and features described with reference to **FIG. 3****,** **FIG. 4****,** **FIG. 5****,** and/or **FIG. 6****.** The method **500** may be a computer implemented method and may be performed by the processing circuitry **110** of the computer system **100** and/or the processing circuitry **210** of the surveillance system **200.**

The method **500** comprises controlling **510** the surveillance system **200** to operate at the power saving state **410** for the predetermined sleep time **312** of the first surveillance cycle **s1.** The method **500** further comprises, upon lapse of the predetermined sleep time **312,** controlling **520** the surveillance system **200** to operate at the detection power state **420.** The method **500** further comprises, at the detection power state **420,** controlling **530** the surveillance system **200** to obtain first image data **323** of the surrounding area **205** of the vehicle **10.** The method **500** further comprises, at the detection power state **420,** processing **540** the first image data **323** to determine **550** whether at least one predetermined target **50** is in the surrounding area **205.** The method **500** further comprises, upon determining **550** that the predetermined target **50** is not present in the surrounding area **205,** controlling **560** the surveillance system **200** to operate at the power saving state **410** for the predetermined sleep time **312** of a second surveillance cycle **s2** following the first surveillance cycle **s1**.

In **FIG. 8** a computer program product **600** is shown. The computer program product 6**00** comprises a computer program **800** and a non-transitory computer readable medium **700.** The computer program **800** may be stored on the computer readable medium **700.** The computer readable medium **700** is, in **FIG. 8****,** exemplified as a vintage 5,25" floppy disc, but may be embodied as any suitable non-transitory computer readable medium such as, but not limited to, hard disk drives (HDDs), solid-state drives (SSDs), optical discs (e.g., CD-ROM, DVD-ROM, CD-RW, DVD-RW), USB flash drives, magnetic tapes, memory cards, Read-Only Memories (ROM), network-attached storage (NAS), cloud storage etc.

The computer program **800** comprises instruction **810** e.g. program instruction, software code, that, when executed by processing circuitry cause the processing circuitry to perform the method **500** introduced with reference to **FIG. 7****.**

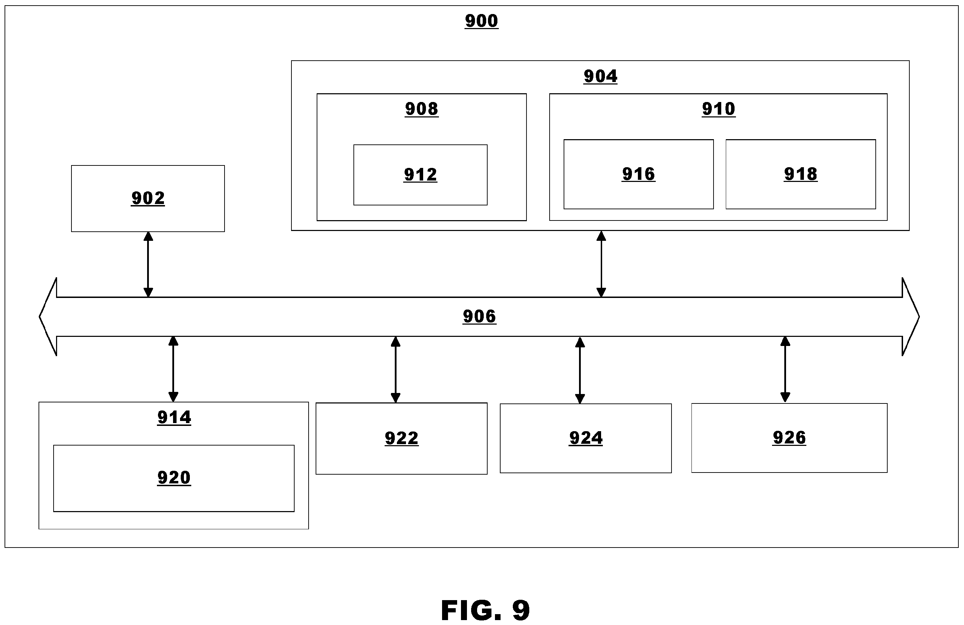

**FIG. 9** is a schematic diagram of a computer system **900** for implementing examples disclosed herein. The computer system **900** may be the computer system **100** introduced with reference to **FIG. 1****.** The computer system **900** is adapted to execute instructions from a computer-readable medium to perform these and/or any of the functions or processing described herein. The computer system **900** may be connected (e.g., networked) to other machines in a LAN, an intranet, an extranet, or the Internet. While only a single device is illustrated, the computer system **900** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **900** may comprise at least one computing device or electronic device capable of including firmware, hardware, and/or executing software instructions to implement the functionality described herein. The computer system **900** may include processing circuitry **902** (e.g., processing circuitry including one or more processor devices or control units), a memory **904,** and a system bus **906.** The processing circuitry **902** may comprise the processing circuitry **110** of the computer system **100** and/or the processing circuitry **210** of the surveillance system **200** introduced with reference to **FIG. 1****.** The computer system **900** may include at least one computing device having the processing circuitry **902.** The system bus **906** provides an interface for system components including, but not limited to, the memory **904** and the processing circuitry **902.** The processing circuitry **902** may include any number of hardware components for conducting data or signal processing or for executing computer code stored in memory **904.** The processing circuitry **902** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **902** may further include computer executable code that controls operation of the programmable device.

The system bus **906** may be any of several types of bus structures that may further interconnect to a memory bus (with or without a memory controller), a peripheral bus, and/or a local bus using any of a variety of bus architectures. The memory **904** may be one or more devices for storing data and/or computer code for completing or facilitating methods described herein. The memory **904** may include database components, object code components, script components, or other types of information structure for supporting the various activities herein. Any distributed or local memory device may be utilized with the systems and methods of this description. The memory **904** may be communicably connected to the processing circuitry **902** (e.g., via a circuit or any other wired, wireless, or network connection) and may include computer code for executing one or more processes described herein. The memory **904** may include non-volatile memory **908** (e.g., read-only memory (ROM), erasable programmable read-only memory (EPROM), electrically erasable programmable read-only memory (EEPROM), etc.), and volatile memory **910** (e.g., random-access memory (RAM)), or any other medium which can be used to carry or store desired program code in the form of machine-executable instructions or data structures and which can be accessed by a computer or other machine with processing circuitry **902.** A basic input/output system (BIOS) **912** may be stored in the non-volatile memory **908** and can include the basic routines that help to transfer information between elements within the computer system **900.**

The computer system **900** may further include or be coupled to a non-transitory computer-readable storage medium such as the storage device **914,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **914** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **914** and/or in the volatile memory **910,** which may include an operating system **916** and/or one or more program modules **918.** All or a portion of the examples disclosed herein may be implemented as a computer program **920** stored on a transitory or non-transitory computer-usable or computer-readable storage medium (e.g., single medium or multiple media), such as the storage device **914,** which includes complex programming instructions (e.g., complex computer-readable program code) to cause the processing circuitry **902** to carry out actions described herein. Thus, the computer-readable program code of the computer program **920** can comprise software instructions for implementing the functionality of the examples described herein when executed by the processing circuitry **902.** In some examples, the storage device **914** may be a computer program product (e.g., readable storage medium) storing the computer program **920** thereon, where at least a portion of a computer program **920** may be loadable (e.g., into a processor) for implementing the functionality of the examples described herein when executed by the processing circuitry **902.** The processing circuitry **902** may serve as a controller or control system for the computer system **900** that is to implement the functionality described herein.

The computer system **900** may include an input device interface **922** configured to receive input and selections to be communicated to the computer system **900** when executing instructions, such as from a keyboard, mouse, touch-sensitive surface, etc. Such input devices may be connected to the processing circuitry **902** through the input device
interface **922** coupled to the system bus **906** but can be connected through other interfaces, such as a parallel port, an Institute of Electrical and Electronic Engineers (IEEE) 1394 serial port, a Universal Serial Bus (USB) port, an IR interface, and the like. The computer system **900** may include an output device interface **924** configured to forward output, such as to a display, a video display unit (e.g., a liquid crystal display (LCD) or a cathode ray tube (CRT)). The computer system **900** may include a communications interface **926** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1. A computer system **100** comprising processing circuitry **110** configured to: control a surveillance system **200** to operate at a power saving state **410** for a predetermined sleep time **312** of a first surveillance cycle **s1**; upon lapse of the predetermined sleep time **312,** control the surveillance system **200** to operate at a detection power state **420;** at the detection power state **420,** control the surveillance system **200** to obtain first image data **323₁** of a surrounding area **205** of a vehicle **10;** at the detection power state **420,** process the first image data **323₁** to determine whether at least one predetermined target **50** is in the surrounding area **205;** upon determining that the predetermined target **50** is not present in the surrounding area **205,** control the surveillance system **200** to operate at the power saving state **410** for the predetermined sleep time of a second surveillance cycle **s2** following the first surveillance cycle **s1.**

Example 2. The computer system **100** of example **1,** wherein the processing circuitry **110** is further configured to, during the second surveillance cycle **s2:** upon lapse of the predetermined sleep time **312,** control the surveillance system **200** to operate at the detection power state **420;** at the detection power state **420,** control the surveillance system **200** to obtain second image data **323₂** of the surrounding area **205** of the vehicle **10;** at the detection power state **420,** process the second image data **323₂** to determine whether at least one predetermined target **50** is in the surrounding area **205;** upon determining that the predetermined target **50** is not present in the surrounding area **205,** control the surveillance system **200** to operate at the power saving state **410** for the predetermined sleep time of a third surveillance cycle s**3** following the second surveillance cycle **s2.**

Example 3. The computer system **100** of example 1 or 2, wherein the processing circuitry **110** is further configured to: at the detection power state **420,** upon determining that the predetermined target **50** is present in the surrounding area **205,** control the surveillance system **200** to operate at a monitoring power state **430.**

Example 4. The computer system **100** of example 2 or 3, wherein processing the second image data **323₂** to determine whether the at least one predetermined target **50** is present in the surrounding area **205** by processing the image data **323** further comprises processing the image data **323** by comparison of the second image data **323₂** to the first image data **323₁**.

Example 5. The computer system **100** of example 4, wherein the processing circuitry **110** is further configured to, at the detection power state **420:** upon determining that the second image data **323₂** is substantially different from the first image data **323₁,** further process the first image data **323₁** by an item recognition circuitry **324** to determine presence of the predetermined target **50** in the surrounding area **205.**

Example 6. The computer system **100** of any one of examples 1 to 5, wherein the processing circuitry **110** is further configured to, at the detection power state **420:** obtain the first image data **323₁** from the surveillance system **200,** wherein the surveillance system **200** comprises a plurality of image sensor systems **220.**

Example 7. The computer system **100** of example 6, wherein the plurality of image sensor systems **220** comprises two or more of a front view image sensor system **220,** a rear view image sensor system **220,** a right view image sensor system **220,** a left view image sensor system **220** or a birds view image sensor system **220.**

Example 8. The computer system **100** of example 6 or 7, wherein the processing circuitry **110** is further configured to: obtain image data **323** from a first image sensor subset comprising at least one image sensor system **220** of the plurality of image sensor systems **220** at the first surveillance cycle **s1**, and obtain image data **323** from a second image sensor subset comprising at least one image sensor system **220** of the plurality of image sensor systems **220** at the second surveillance cycle **s2,** wherein the first image sensor subset is different from the second image sensor subset.

Example 9. The computer system **100** of any one of examples 6 to 8, wherein the processing circuitry **110** is further configured to: upon a lapse of the predetermined sleep time **312** of each surveillance cycle, control a subset of a plurality of image sensor systems **220** of the surveillance system **200** to operate at the detection power state, wherein each subset of the plurality of image sensor systems **220** is cycled through in an order, the order being at least one of, a predetermined order, a variable order determined depending on targets detected, a random order.

Example 10. The computer system **100** of any one of examples 1 to 9, wherein the processing circuitry **110** is further configured to: at the detection power state **420,** obtain first image data **323₁** as a single still image.

Example 11. The computer system **100** of any one of examples 3 to 10, wherein the processing circuitry **110** is further configured to: at the monitoring power state **430,** obtain monitoring image data **323** with a higher framerate than the first image data **323₁**.

Example 12. The computer system **100** of any one of examples 1 to 11, wherein the predetermined sleep time **312** is **30** s or less.

Example 13. The computer system **100** of any one of examples 1 to 12, wherein the processing circuitry **110** is further configured to: upon obtaining sensor data, from sensor circuitry **16** of the vehicle **10,** indicating movement at the surrounding area **205** of a vehicle **10,** wake up from the power saving state **410** to the detection power state **420.**

Example 14. The computer system **100** of any one of examples 1 to 13, wherein the predetermined target **50** is a person and/or a suspicious object.

Example 15. The computer system **100** of any one of examples 1 to 14, wherein the detection power state **420** consumes more power than the power saving state **410** and the monitoring power state **430** consumes more power than the detection power state **420.**

Example 16. The computer system **100** of example 1, wherein the processing circuitry **110** is further configured to: during the second surveillance cycle **s2:** upon lapse of the predetermined sleep time **312,** control the surveillance system **200** to operate at the detection power state **420;** at the detection power state **420,** control the surveillance system **200** to obtain second image data **323₂** of the surrounding area **205** of the vehicle **10;** at the detection power state **420,** process the second image data **323₂** to determine whether at least one predetermined target **50** is in the surrounding area **205;** upon determining that the predetermined target **50** is not present in the surrounding area **205,** control the surveillance system **200** to operate at the power saving state **410** for the predetermined sleep time of a third surveillance cycle s**3** following the second surveillance cycle **s2;** upon determining that the predetermined target **50** is present in the surrounding area **205,** control the surveillance system **200** to operate at a monitoring power state **430;** wherein processing the second image data **323₂** to determine whether the at least one predetermined target **50** is present in the surrounding area **205** by processing the image data **323** further comprises processing the image data **323** by comparison of the second image data **323₂** to the first image data **323₁**; wherein the processing circuitry **110** is further configured to, at the detection power state **420:** upon determining that the second image data **323₂** is substantially different from the first image data **323₁,** further process the first image data **323₁** by an item recognition circuitry **324** to determine presence of the predetermined target **50** in the surrounding area **205;** at the detection power state **420:** obtain the first image data **323₁** from the surveillance system **200,** wherein the surveillance system **200** comprises a plurality of image sensor systems **220;** wherein the plurality of image sensor systems **220** comprises two or more of a front view image sensor system **220,** a rear view image sensor system **220,** a right view image sensor system **220,** a left view image sensor system **220** or a birds view image sensor system **220;** obtain image data **323** from a first image sensor subset comprising at least one image sensor system **220** of the plurality of image sensor systems **220** at the first surveillance cycle **s1**, and obtain image data **323** from a second image sensor subset comprising at least one image sensor system **220** of the plurality of image sensor systems **220** at the second surveillance cycle **s2,** wherein the first image sensor subset is different from the second image sensor subset; upon a lapse of the predetermined sleep time **312** of each surveillance cycle, control a subset of a plurality of image sensor systems **220** of the surveillance system **200** to operate at the detection power state, wherein each subset of the plurality of image sensor systems **220** is cycled through in an order, the order being at least one of, a predetermined order, a variable order determined depending on targets detected, a random order; at the detection power state **420,** obtain first image data **323₁** as a single still image; and, at the monitoring power state **430,** obtain monitoring image data **323** with a higher framerate than the first image data **323₁**; wherein the predetermined sleep time **312** is **30** s or less; wherein the processing circuitry **110** is further configured to: upon obtaining sensor data, from sensor circuitry **16** of the vehicle **10,** indicating movement at the surrounding area **205** of a vehicle **10,** wake up from the power saving state **410** to the detection power state **420;** wherein the predetermined target **50** is a person and/or a suspicious object; wherein the detection power state **420** consumes more power than the power saving state **410** and the monitoring power state **430** consumes more power than the detection power state **420.**

Example 17. A vehicle **10** comprising the computer system **100** of any one of examples 1 to 16.

Example 18. The vehicle **10** of example 17, wherein the power saving state **410** is entered responsive to the vehicle **10** being parked.

Example 19. The vehicle **10** of example 17 or 18, wherein the vehicle **10** is a heavy-duty vehicle.

Example 20. A computer implemented method **500** comprising: controlling **510,** by processing circuitry **110** of a computer system **100,** surveillance system **200** to operate at a power saving state **410** for a predetermined sleep time **312** of a first surveillance cycle **s1**; upon lapse of the predetermined sleep time **312,** controlling **520,** by the processing circuitry **110** of the computer system **100,** the surveillance system **200** to operate at a detection power state **420;** at the detection power state **420,** controlling **530,** by the processing circuitry **110** of the computer system **100,** the surveillance system **200** to obtain first image data **323₁** of a surrounding area **205** of a vehicle **10;** at the detection power state **420,** processing **540,** by the processing circuitry **110** of the computer system **100,** the first image data **323₁** to determine **550** whether at least one predetermined target **50** is in the surrounding area **205;** upon determining **550** that the predetermined target **50** is not present in the surrounding area **205,** controlling **560,** by the processing circuitry **110** of the computer system **100,** the surveillance system **200** to operate at the power saving state **410** for the predetermined sleep time of a second surveillance cycle **s2** following the first surveillance cycle **s1**.

Example 21. The computer implemented method **500** of example 20, further comprising: upon lapse of the predetermined sleep time **312,** controlling, by the processing circuitry **110** of the computer system **100,** the surveillance system **200** to operate at the detection power state **420;** at the detection power state **420,** controlling, by the processing circuitry **110** of the computer system **100,** the surveillance system **200** to obtain second image data **323₂** of the surrounding area **205** of the vehicle **10;** at the detection power state **420,** processing, by the processing circuitry **110** of the computer system **100,** the second image data **323₂** to determine whether at least one predetermined target **50** is in the surrounding area **205;** upon determining that the predetermined target **50** is not present in the surrounding area **205,** controlling, by the processing circuitry **110** of the computer system **100,** the surveillance system **200** to operate at the power saving state **410** for the predetermined sleep time of a third surveillance cycle s**3** following the second surveillance cycle **s2.**

Example 22. The computer implemented method **500** of example 20 or 21, further comprising: at the detection power state **420,** upon determining that the predetermined target **50** is present in the surrounding area **205,** controlling, by the processing circuitry **110** of the computer system **100,** the surveillance system **200** to operate at a monitoring power state **430.**

Example 23. The computer implemented method **500** of example 21 or 22, wherein processing the second image data **323₂** to determine whether the at least one predetermined target **50** is present in the surrounding area **205** by processing, by the processing circuitry **110** of the computer system **100,** the image data **323** further comprises processing the image data **323** by comparison of the second image data **323₂** to the first image data **323₁**.

Example 24. The computer implemented method **500** of example 23, further comprising: upon determining that the second image data **323₂** is substantially different from the first image data **323₁,** further processing, by the processing circuitry **110** of the computer system **100,** the first image data **323₁** by an item recognition circuitry **324** to determine presence of the predetermined target 50 in the surrounding area **205.**

Example 25. The computer implemented method **500** of any one of examples 20 to 24, further comprising: obtaining, by the processing circuitry **110** of the computer system **100,** the first image data **323₁** from the surveillance system **200,** wherein the surveillance system **200** comprises a plurality of image sensor systems **220.**

Example 26. The computer implemented method **500** of example 24 or 25, further comprising: obtaining, by the processing circuitry **110** of the computer system **100,** image data **323** from a first image sensor subset comprising at least one image sensor system **220** of a plurality of image sensor systems **220** of the surveillance system **200** at the first surveillance cycle **s1**, and obtaining, by the processing circuitry **110** of the computer system **100,** image data **323** from a second image sensor subset comprising at least one image sensor system **220** of the plurality of image sensor systems **220** at the second surveillance cycle **s2,** wherein the first image sensor subset is different from the second image sensor subset.

Example 27. The computer implemented method **500** of any one of examples 24 to 26, further comprising: upon a lapse of the predetermined sleep time **312** of each surveillance cycle, controlling, by the processing circuitry **110** of the computer system **100,** a subset of a plurality of image sensor systems **220** of the surveillance system **200** to operate at the detection power state, wherein each subset of the plurality of image sensor systems **220** is cycled through in an order, the order being at least one of, a predetermined order, a variable order determined depending on targets detected, a random order.

Example 28. The computer implemented method **500** of any one of examples 20 to 27, further comprising: at the detection power state **420,** obtaining, by the processing circuitry **110** of the computer system **100,** first image data **323₁** as a single still image.

Example 29. The computer implemented method **500** of any one of examples 20 to 28, further comprising: at the monitoring power state **430,** obtaining, by the processing circuitry **110** of the computer system **100,** monitoring image data **323** with a higher framerate than the first image data **323₁**.

Example 30. The computer implemented method **500** of any one of examples **20** to **29,** further comprising: upon obtaining, by the processing circuitry **110** of the computer system **100,** sensor data, from sensor circuitry **16** of the vehicle **10,** indicating movement at the surrounding area **205** of a vehicle **10,** waking up, by the processing circuitry **110** of the computer system **100,** from the power saving state **410** to the detection power state **420.**

Example 31.A computer program product comprising program code for performing, when executed by the processing circuitry, the method of any of examples 20 to 30.

Example 32. A non-transitory computer-readable storage medium comprising instructions, which when executed by the processing circuitry, cause the processing circuitry to perform the method of any of examples 20 to 30.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) comprising processing circuitry (110) configured to:
control a surveillance system (200) to operate at a power saving state (410) for a predetermined sleep time (312) of a first surveillance cycle (s1);
upon lapse of the predetermined sleep time (312), control the surveillance system (200) to operate at a detection power state (420);
at the detection power state (420), control the surveillance system (200) to obtain first image data (323₁) of a surrounding area (205) of a vehicle (10);
at the detection power state (420), process the first image data (323₁) to determine whether at least one predetermined target (50) is in the surrounding area (205);
upon determining that the predetermined target (50) is not present in the surrounding area (205), control the surveillance system (200) to operate at the power saving state (410) for the predetermined sleep time of a second surveillance cycle (s2) following the first surveillance cycle (s1).

2. The computer system (100) of claim 1, wherein the processing circuitry (110) is further configured to, during the second surveillance cycle (s2):
upon lapse of the predetermined sleep time (312), control the surveillance system (200) to operate at the detection power state (420);
at the detection power state (420), control the surveillance system (200) to obtain second image data (323₂) of the surrounding area (205) of the vehicle (10);
at the detection power state (420), process the second image data (323₂) to determine whether at least one predetermined target (50) is in the surrounding area (205);
upon determining that the predetermined target (50) is not present in the surrounding area (205), control the surveillance system (200) to operate at the power saving state (410) for the predetermined sleep time of a third surveillance cycle (s3) following the second surveillance cycle (s2).

3. The computer system (100) of claim 1 or 2, wherein the processing circuitry (110) is further configured to:
at the detection power state (420), upon determining that the predetermined target (50) is present in the surrounding area (205), control the surveillance system (200) to operate at a monitoring power state (430).

4. The computer system (100) of claim 2 or 3, wherein processing the second image data (323₂) to determine whether the at least one predetermined target (50) is present in the surrounding area (205) by processing the image data (323) further comprises processing the image data (323) by comparison of the second image data (323₂) to the first image data (323₁).

5. The computer system (100) of claim 4, wherein the processing circuitry (110) is further configured to, at the detection power state (420):
upon determining that the second image data (323₂) is substantially different from the first image data (323₁), further process the first image data (323₁) by an item recognition circuitry (324) to determine presence of the predetermined target (50) in the surrounding area (205).

6. The computer system (100) of any one of claims 1 to 5, wherein the processing circuitry (110) is further configured to, at the detection power state (420):
obtain the first image data (323₁) from the surveillance system (200), wherein the surveillance system (200) comprises a plurality of image sensor systems (220).

7. The computer system (100) of claim 6, wherein the processing circuitry (110) is further configured to:
obtain image data (323) from a first image sensor subset comprising at least one image sensor system (220) of the plurality of image sensor systems (220) at the first surveillance cycle (s1), and obtain image data (323) from a second image sensor subset comprising at least one image sensor system (220) of the plurality of image sensor systems (220) at the second surveillance cycle (s2), wherein the first image sensor subset is different from the second image sensor subset.

8. The computer system (100) of claim 6 or 7, wherein the processing circuitry (110) is further configured to:
upon a lapse of the predetermined sleep time (312) of each surveillance cycle, control a subset of a plurality of image sensor systems (220) of the surveillance system (200) to operate at the detection power state,
wherein each subset of the plurality of image sensor systems (220) is cycled through in an order, the order being at least one of, a predetermined order, a variable order determined depending on targets detected, a random order.

9. The computer system (100) of claim 1, wherein the processing circuitry (110) is further configured to:
during the second surveillance cycle (s2), upon lapse of the predetermined sleep time (312), control the surveillance system (200) to operate at the detection power state (420); at the detection power state (420), control the surveillance system (200) to obtain second image data (323₂) of the surrounding area (205) of the vehicle (10); at the detection power state (420), process the second image data (323₂) to determine whether at least one predetermined target (50) is in the surrounding area (205); upon determining that the predetermined target (50) is not present in the surrounding area (205), control the surveillance system (200) to operate at the power saving state (410) for the predetermined sleep time of a third surveillance cycle (s3) following the second surveillance cycle (s2);
at the detection power state (420), upon determining that the predetermined target (50) is present in the surrounding area (205), control the surveillance system (200) to operate at a monitoring power state (430);
at the detection power state (420), upon determining that the second image data (323₂) is substantially different from the first image data (323₁), further process the first image data (323₁) by an item recognition circuitry (324) to determine presence of the predetermined target (50) in the surrounding area (205);
at the detection power state (420), obtain the first image data (323₁) from the surveillance system (200), wherein the surveillance system (200) comprises a plurality of image sensor systems (220);
obtain image data (323) from a first image sensor subset comprising at least one image sensor system (220) of the plurality of image sensor systems (220) at the first surveillance cycle (s1), and obtain image data (323) from a second image sensor subset comprising at least one image sensor system (220) of the plurality of image sensor systems (220) at the second surveillance cycle (s2), wherein the first image sensor subset is different from the second image sensor subset; and
upon a lapse of the predetermined sleep time (312) of each surveillance cycle, control a subset of a plurality of image sensor systems (220) of the surveillance system (200) to operate at the detection power state, wherein each subset of the plurality of image sensor systems (220) is cycled through in an order, the order being at least one of, a predetermined order, a variable order determined depending on targets detected, a random order.
wherein processing the second image data (323₂) to determine whether the at least one predetermined target (50) is present in the surrounding area (205) by processing the image data (323) further comprises processing the image data (323) by comparison of the second image data (323₂) to the first image data (323₁).

10. A vehicle (10) comprising the computer system (100) of any one of claims 1 to 9.

11. The vehicle (10) of claim 10, wherein the power saving state (410) is entered responsive to the vehicle (10) being parked.

12. The vehicle (10) of claim 10 or 11, wherein the vehicle (10) is a heavy-duty vehicle.

13. A computer implemented method (500) comprising:
controlling (510), by processing circuitry (110) of a computer system (100), surveillance system (200) to operate at a power saving state (410) for a predetermined sleep time (312) of a first surveillance cycle (s1);
upon lapse of the predetermined sleep time (312), controlling (520), by the processing circuitry (110) of the computer system (100), the surveillance system (200) to operate at a detection power state (420);
at the detection power state (420), controlling (530), by the processing circuitry (110) of the computer system (100), the surveillance system (200) to obtain first image data (323₁) of a surrounding area (205) of a vehicle (10);
at the detection power state (420), processing (540), by the processing circuitry (110) of the computer system (100), the first image data (323₁) to determine (550) whether at least one predetermined target (50) is in the surrounding area (205);
upon determining (550) that the predetermined target (50) is not present in the surrounding area (205), controlling (560), by the processing circuitry (110) of the computer system (100), the surveillance system (200) to operate at the power saving state (410) for the predetermined sleep time of a second surveillance cycle (s2) following the first surveillance cycle (s1).

14. A computer program product (600) comprising program code (810) for performing, when executed by the processing circuitry (110), the method of claim 13.

15. A non-transitory computer-readable storage medium (700) comprising instructions (810), which when executed by the processing circuitry (110), cause the processing circuitry (110) to perform the method of clam 13.
